# EUROPEAN PATENT APPLICATION

(11) **EP 1 102 092 A2**
(43) Date of publication of application: **23.05.2001**
(21) Application number: 00310240.7
(22) Date of filing: 17.11.2000
(51) Int. Cl.: G02B 5/22, C09B 29/36

(54) **Photoselective absorbing filter and color display device incorporating it**

(30) Priority: 19.11.1999 JP 32962699; 16.10.2000 JP 2000315184
(71) Applicant: SANYO COLOR WORKS, LTD., Himeji-Shi Hyogo (JP)
(72) Inventor: Wada, Atsushi, Himeji-shi, Hyogo 670-0966 (JP); Kawasaki, Yoshinori, Himeji-shi, Hyogo 670-0966 (JP)
(74) Representative: West, Alan Harry

(57) **Abstract**

There is provided a photoselective absorbing filter that does not reduce the luminance of picture elements and is capable of efficiently absorbing reflected light and a color display device including such a filter. The transmittance of light at wavelengths of 470 to 510 nm and 550 to 600 nm relative to transmittance in the visible range other than those two wavelength ranges is reduced, preferably by use of a coloring material containing a pyridinophthalocyanine selected from metal tetra-2,3-pyridinoporphyrazines, metal tetra-3,4-pyridinoporphyrazines, tetra-2,3-pyridinoporphyrazines and tetra-3,4-pyridinoporphyrazines, and an anthraquinone dye suitably selected from Solvent Orange (35, 64, 65, 66, 68, 69, 71, 77, 86 and 87) and Solvent Red (52, 152, 155, 156, 168, 169, 170, 171, 172, 175, 177, 181, 190 and 191).

## Description

This invention relates to a photoselective absorbing filter and to a color display device incorporating it. More particularly, it relates to a photoselective absorbing filter in which the transmittance of reflected light at wavelengths of 470 to 510 nm and 550 to 600 nm is reduced while absorption of light from the display device is minimised.

Color display devices such as CRTs, PDPs (plasma display panels) and liquid crystal display panels are usually provided with an anti-reflection filter to improve contrast, and a single-layer filter is particularly preferred because of its ease of handling. The anti-reflection filter is used to prevent external light incident upon the display from being reflected from the picture plane and thereby rendering the display invisible.

The anti-reflection filter functions ideally to reduce to a minimum any decrease in luminance of light from red, green and blue picture elements and to absorb external light as much as possible, and filters of this nature using various color materials are known.

For example, coloring materials prepared by mixing a blue pigment with a red pigment and an anhydrous phosphoric acid cobalt pigment have recently been proposed. However, the luminance is reduced due to poor transparency and the basic quality of the filter is insufficient.

Another proposed filter formed by mixing the blue pigment with the red pigment has the drawback that transmittance is lowered at green color wavelengths of 500 to 600 nm, thereby absorbing light emitted from the green picture element, resulting in reduced luminance.

The present invention seeks to solve the problems described above and to provide a photoselective absorbing filter that does not cause a decrease in luminance of the picture elements in a display device and is capable of absorbing external light with high efficiency.

In accordance with the invention, there is now provided a photoselective absorbing filter comprising a light selective absorbing coloring material that selectively absorbs external light in a color display device with blue, green and red picture elements, characterized in that the transmission of light at wavelengths of 470 to 510 nm and 550 to 600 nm is smaller than that in the visible range other than at those two wavelength ranges.

Usually, blue, green and red picture elements have emission spectrum peaks at about 450 nm, 540 nm and 630 nm. However, the photoselective absorbing filter of the invention has absorption peaks at wavelength ranges quite separate from these three emission peaks, that is, at wavelengths ranging from 470 to 510 nm and from 550 to 600 nm so that the luminance of the light-emitting picture elements is not lowered and, moreover, reflected light is absorbed with high efficiency.

The photoselective absorbing filter of the invention can be applied to various color display devices such as CRTs, PDPs, and liquid crystal display panels.

The photoselective absorbing coloring material preferably contains a pyridinophthalocyanine selected from metal tetra-2,3-pyridinoporphyrazines of the general formula (I), metal tetra-3,4-pyridinoporphyrazines of the general formula (II), tetra-2,3-pyridinoporphyrazines of the general formula (III) and tetra-3,4-pyridinoporphyrazines of the general formula (IV), and an anthraquinone dye.

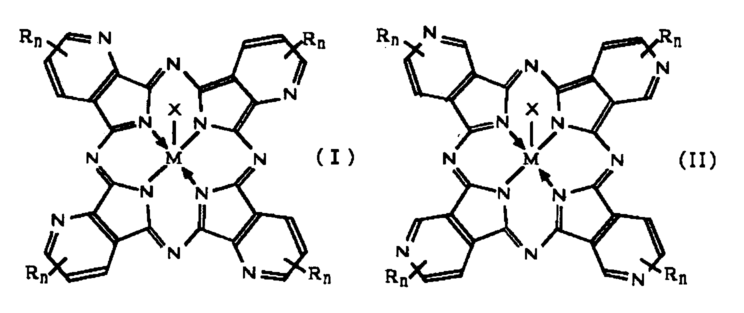

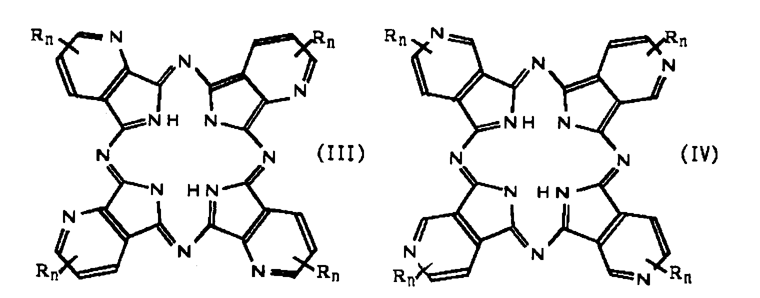

In these general formulae, M is a center metal selected from copper, cobalt, nickel, zinc, iron, tin and aluminum; X is a ligand bonded directly to the center metal M and is a halogen atom such as fluorine, chlorine or bromine, an oxygen atom, a nitrogen atom, a hydroxy group, or a siloxane group in general formulae (I) and (II); R is an alkyl group or a halogen atom; and n is 0 or an integer from 1 to 3. M is defined above as a "center metal" and not as a "center ion" because the metal tetrapyridinoporphyrazines do not dissociate into ions in the photoselective absorbing filter of the invention (in contrast to their behaviour in solution).

The pyridinophthalocyanines may be prepared, for example, by heating 2,3-dicyanopyridine, 3,4-dicyanopyridine or a derivative thereof, together with a metal source such as cupric chloride, or by heating a metal source such as cupric chloride, and quinolineamide, together with an ammonium salt of aminosulphonic acid. However, it is more advantageous in view of practical considerations and cost to use the Wyler method (e.g. "PHTHALOCYANINE COMPOUNDS", Moser et al., Reinhold Publ. Co., 1963, "SHINSENRYO KAGAKU (New Dye Chemistry)", by Yutaka HOSODA, Gihodo, 1963), a typical method for preparing copper- phthalocyanines known as coloring materials. Starting materials for the preparation of metal phthalocyanines in the Wyler method are phthalic anhydride, urea, metal sources such as copper chloride, and a catalyst (ammonia molybdate). For preparing pyridinophthalocyanines, phthalic anhydride can be replaced by quinolic acid, quinolic anhydride, cinchomeronic acid or a derivative thereof in accordance with a method for synthesizing copper-phthalocyanine, and other conditions such as reaction temperature, time and the like are the same as those for the Wyler method.

The amount of starting materials such as quinolic acid, quinolic anhydride, cinchomeronic acid or a derivative thereof is as significant here as in a conventional reaction so as to ensure that the pyridiniophthalocyanine pigment exerts an objective function.

Examples of the anthraquinone dye used in the photosensitive absorbing filter of the invention include Solvent Orange (35, 64, 65, 66, 68, 69, 71, 77, 86 and 87) and Solvent Red (52, 152, 155, 156, 168, 169, 170, 171, 172, 175, 177, 181, 190 and 191). The numerical values in parentheses indicate Color Index.

The coloring material used to make the photoselective absorbing filter of the invention can be prepared by converting the pyridinophthalocyanine into a dispersion and mixing the dispersion with a solution of the anthraquinone dye. The pyridinophthalocyanine dispersion can be prepared by using conventionally known devices such as ball mills, bead mills, roll mills or ultrasonic dispersing devices.

The weight ratio of the pyridinophthalocyanine to the anthraquinone dye is preferably from 80:20 to 20:80; depending upon the shape of the transmission spectrum. When the proportion of pyridinophthalocyanine exceeds 80%, absorption at about 480 nm becomes poor and it is not then possible to expect efficient absorption of external light. On the other hand, when the proportion of the anthraquinone dye exceeds 80%, absorption at about 580 nm becomes poor and it is not then possible to expect efficient absorption of external light.

The following Example and Comparative Examples illustrate the invention. In the Examples "parts" are by weight unless otherwise stated. In the Examples, reference is made to the accompanying drawings, in which
Fig. 1 is a transmission spectrum of a photoselective absorbing filter according to one example of the invention;
Fig. 2 is a transmission spectrum of a comparative photoselective absorbing filter; and
Fig. 3 is a transmission spectrum of another comparative photoselective absorbing filter.

### Example 1

800g of zirconia beads having a diameter of 0.5 mm were added to the following components and then dispersed in a sand mill for one hour to prepare a pyridinophthalocyanine dispersion as Composition 1.

| | |
|---|---|
| Copper tetra-2,3-pyridinoporphyrazine | 20 parts |
| BYK-110 (manufactured by BYK Chemie Co.) | 10 parts |
| Toluene | 170 parts |

Subsequently, the following components were stirred for one hour to prepare a dye solution as Composition 2.

| | |
|---|---|
| Dia Resin Orange G (manufactured by Mitsubishi Chemical Industries Co., Ltd.) | |
| | 1.3 parts |
| (C.I. Solvent Orange 68) | |
| Toluene | 198.7 parts |

The pyridinophthalocyanine dispersion of Composition 1 and the dye solution of Composition 2 were mixed in accordance with the following formulation, and stirred for one hour to obtain a mixed solution (Composition 3). Although a polyvinyl chloride resin was used as a binder, an acrylic resin may be used in place of it.

| | |
|---|---|
| Dispersion of Composition 1 | 1 part |
| Dye solution of Composition 2 | 90 parts |
| Polyvinyl chloride resin (VYHH, manufactured by Union Carbide Co.) | 12 parts 12 parts |
| Toluene | 60 parts |

The mixture was stirred for one hour to give a coating solution. A glass plate was spin-coated with the resulting coating solution to a film thickness of 0.6 to 0.7 µm to obtain a photoselective absorbing filter according to the invention.

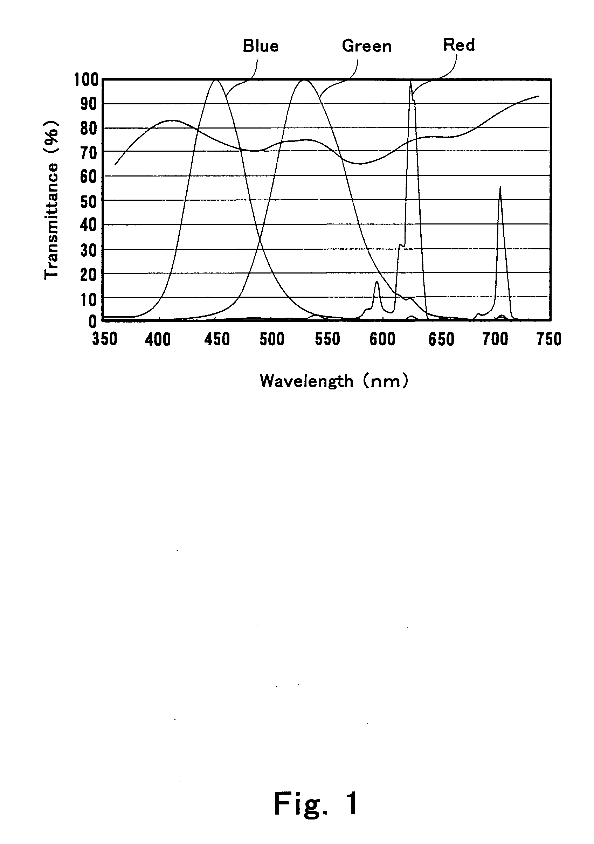

Fig. 1 is the transmission spectrum of the photoselective absorbing filter of Example 1. The emission spectra of red, green and blue are also shown. The emission spectra of red, green and blue of the color display device have dominant emission peaks at wavelengths of about 625 nm, 535 nm and 450 nm. In contrast the transmission spectrum of the coloring material of the filter of Example 1 has an absorption peak (i.e. low transmittance range) at a wavelength of about 580 nm which exists between the two dominant emission peaks of red and green, and at a wavelength of about 480 nm which exits between the two dominant emission peaks of blue and green.

### Comparative Example 1

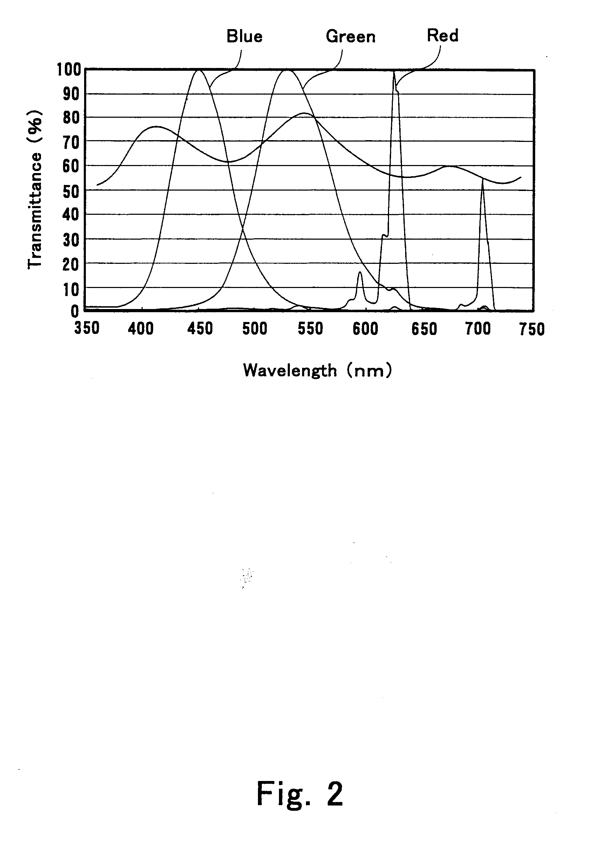

In the same manner as in Example 1, except that Cyanine Blue KRO (C.I. Pigment Blue 15:3, manufactured by Sanyo Color Works Ltd.) was used in place of pyridinophthalocyanine in Example 1, a glass plate was coated to obtain a photoselective absorbing filter. Fig. 2 is the transmission spectrum of this photoselective absorbing filter. In Fig. 2, the emission spectra of red, green and blue colors of the color display device are also shown for comparison. As is apparent from the shape of the spectrum in Fig. 2, absorption at the long wavelength side appeared at about 620 nm in the photosensitive absorbing filter of Comparative Example 1 so that the red emission peak of the color display device is drastically absorbed, thereby causing a decrease in luminance.

### Comparative Example 2

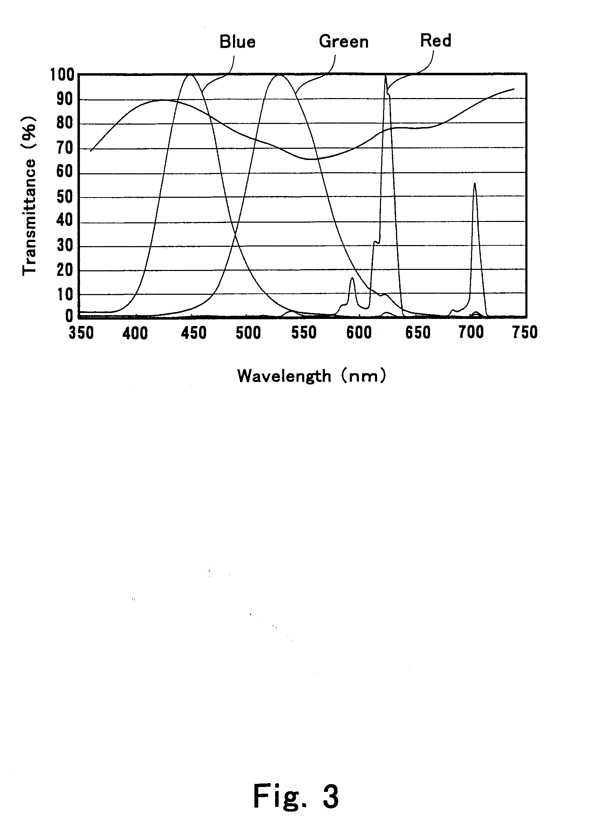

In the same manner as in Example 1, except that C.I. Solvent Red 111 was used in place of C.I. Solvent Orange 68 as the anthraquinone dye in Example 1, a glass plate was coated to obtain a photoselective absorbing filter. Fig. 3 is the transmission spectrum of this photoselective absorbing filter. In Fig. 3, the emission spectra of red, green and blue of the color display device are also shown for comparison. As is apparent from the shape of the spectrum in Fig. 3, the green emission peak of the color display device is absorbed, thereby causing a decrease in luminance in the photoselective absorbing filter of Comparative Example 2.

The photoselective absorbing filters of Example 1 and of Comparative Examples 1 and 2 were used in a color CRT display device. The luminance of red, green and blue picture elements was high and the amount of reflected light was small in the CRT display device using the photoselective absorbing filter of Example 1. In contrast, the luminance of the red and green picture elements was low and the amount of reflected light was not greatly reduced in the CRT display devices using the photoselective absorbing filters of Comparative Examples 1 and 2, respectively.

Photosensitive absorbing filters of the invention absorb external light with good efficiency without causing a decrease in luminance due to the absorption of red, green and blue light of color display devices with which they are used because transmittance of light at wavelengths of 470 to 510 nm and 550 to 600 nm is lower than transmittance of light in the visible range other than those two ranges.

A color display device with the photosensitive absorbing filter of the invention presents users of the color display device with a picture plane with less reduction in luminance due to absorption of red, green and blue light and less reflected light.

## Claims

1. A photoselective absorbing filter comprising a light selective absorbing coloring material that selectively absorbs external light in a color display device with blue, green and red picture elements, characterized in that the transmission of light at wavelengths of 470 to 510 nm and 550 to 600 nm is smaller than that in the visible range other than at those two wavelength ranges.

2. A photoselective absorbing filter according to claim 1, wherein the light selective absorbing coloring material contains a pyridinophthalocyanine selected from metal tetra-2,3-pyridinoporphyrazines of the general formula (I), metal tetra-3,4-pyridinoporphyrazines of the general formula (II), tetra- 2,3-pyridinoporphyrazines of the general formula (III) and tetra-3,4- pyridinoporphyrazines of the general formula (IV), and an anthraquinone dye: 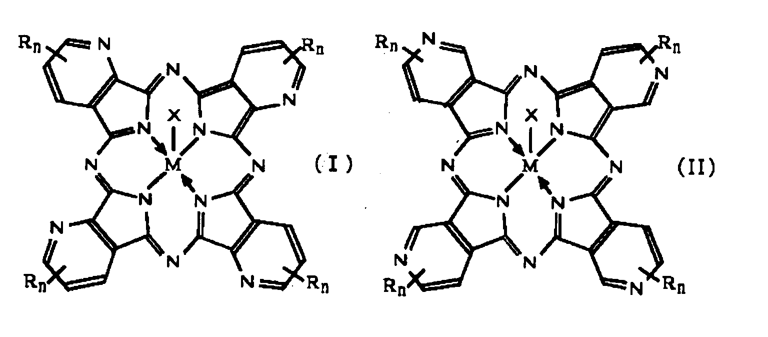 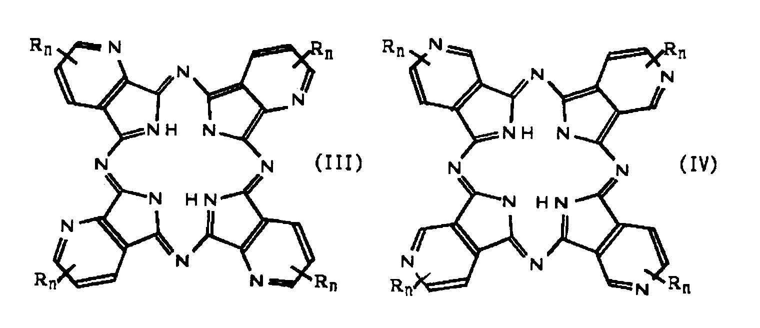 in which M is a center metal selected from copper, cobalt, nickel, zinc, iron, tin and aluminum; X is a ligand bonded directly to the center metal M and is a halogen atom selected from fluorine, chlorine and bromine, an oxygen atom, a nitrogen atom, a hydroxy group, or a siloxane group in general formulae (I) and (II); and R is an alkyl group or a halogen atom; and n is 0 or an integer from 1 to 3.

3. A photoselective absorbing filter according to claim 2, wherein the anthraquinone dye is a compound selected from Solvent Orange (35, 64, 65, 66, 68, 69, 71, 77, 86 and 87) and Solvent Red (52, 152, 155, 156, 168, 169, 170, 171, 172, 175, 177, 181, 190 and 191).

4. A photoselective absorbing filter according to claim 2 or claim 3, wherein the weight ratio of the pyridinophthalocyanine to the anthraquinone dye is from 20:80 to 80:20.

5. A photoselective absorbing filter according to any one of claims 1 to 4, which is obtained by coating the surface of a film with the light selective absorbing coloring material.

6. A photoselective absorbing filter according to any one of claims 1 to 4, wherein the light selective absorbing coloring material is uniformly dispersed in a film.

7. A photoselective absorbing filter according to any one of claims 1 to 4, wherein the light selective absorbing coloring material is dispersed in an alcohol-containing solvent and a glass surface is coated with the dispersion using a sol-gel method.

8. A color display device comprising a photoselective absorbing filter according to any one of claims 1 to 7.
